# EUROPEAN PATENT APPLICATION

(11) **EP 4 697 465 A1**
(43) Date of publication of application: **18.02.2026**
(21) Application number: 24886371.4
(22) Date of filing: 01.11.2024
(51) Int. Cl.: H01M 50/184, H01M 50/186, H01M 50/538, H01M 50/188, H01M 50/167

(54) **BATTERY, AND BATTERY PACK AND VEHICLE INCLUDING SAME**

(30) Priority: 01.11.2023 KR 20230149470; 30.10.2024 KR 20240150664
(71) Applicant: LG Energy Solution, Ltd., Seoul 07335 (KR)
(72) Inventor: KO, Kwang-Hun, Daejeon 34122 (KR); KIM, Do-Gyun, Daejeon 34122 (KR); LEE, Da-Som, Daejeon 34122 (KR); HWANGBO, Kwang-Su, Daejeon 34122 (KR)
(74) Representative: Goddar, Heinz J.
(86) International application number: PCT/KR2024/017088
(87) International publication number: WO 2025/095701

(57) **Abstract**

A battery according to an embodiment of the present disclosure may include an electrode assembly including an electrode having an uncoated area, a battery housing having an opening formed at one side and an inner space capable of accommodating the electrode assembly, a cap fixed to an area of the battery housing so as to cover the opening, a gasket surrounding an edge of the cap and fixed between the cap and the battery housing, a first portion provided at one end of the gasket so as to be in close contact with a lower surface of the capable of, and a second portion in close contact with an inner surface of the battery housing.

## Description

### TECHNICAL FIELD

The present disclosure relates to a battery, a battery pack and a vehicle including the same. This application is based on and claims priority from Korean Patent Application No. 10-2023-0149470, filed on November 01, 2023, and Korean Patent Application No. 10-2024-0150664, filed on October 30, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Secondary batteries currently widely used include lithium-ion batteries, lithium-polymer batteries, nickel-cadmium batteries, nickel-hydrogen batteries, nickel-zinc batteries, and the like. The operating voltage of this unit secondary battery cell is approximately 2.5 V to 4.5 V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack and electrical connection thereof may be set in various ways depending on the required output voltage or charge/discharge capacity.

Meanwhile, secondary battery cells are classified into cylindrical, prismatic, and pouch-type batteries. The cylindrical batteries are manufactured by winding a positive electrode, a negative electrode, and a separator, as an insulator, interposed therebetween to form a jellyroll-type electrode assembly and then inserting the same into a battery housing together with an electrolyte. Then, the opening of the battery housing is covered with a vent cap.

In addition, a gasket for sealing is provided between the vent cap and the battery housing. However, if the internal pressure of the battery increases, the sealing of the gasket deteriorates, which may lead to leakage of the electrolyte from the battery housing.

### DISCLOSURE

### Technical Problem

The present disclosure is designed to solve the problems of the related art, and therefore the present disclosure is directed to providing a battery capable of strengthening the sealing state of the battery when the internal pressure increases due to thermal runaway inside the battery.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery including an electrode assembly including an electrode having an uncoated area, a battery housing having an opening formed at one side and an inner space capable of accommodating the electrode assembly, a cap fixed to an area of the battery housing so as to cover the opening, a gasket surrounding an edge of the cap and fixed between the cap and the battery housing, and a sealing portion provided at one end of the gasket and including a first portion in close contact with a lower surface of the cap and a second portion in close contact with an inner surface of the battery housing.

In addition, the sealing portion may be formed integrally with the gasket so as to extend from the one end of the gasket.

In addition, the sealing portion may be configured as a separate configuration from the gasket and connected to the one end of the gasket.

In addition, the first portion may be configured to come into closer contact with the lower surface of the cap if pressure inside the battery housing increases.

In addition, the first portion may seal a gap between the one end of the gasket and the lower surface of the cap.

In addition, the second portion may be configured to come into closer contact with the inner surface of the battery housing if pressure inside the battery housing increases.

In addition, the second portion may seal a gap between the one end of the gasket and the inner surface of the battery housing.

In addition, if pressure inside the battery housing increases, an angle between the first portion and the second portion may increase, so that the first portion may come into closer contact with the lower surface of the cap and so that the second portion may come into closer contact with the inner surface of the battery housing.

The battery may further include a current collector configured to electrically connect the electrode assembly and the battery housing, and the sealing portion may be configured to surround at least a portion of the current collector.

In addition, the second portion may be configured to surround and seal at least a portion of the current collector.

In addition, the current collector may be electrically connected to the battery housing by penetrating at least a portion of the sealing portion.

In addition, the first portion may be configured to form a predetermined angle with the lower surface of the cap.

In addition, the second portion may be configured to form a predetermined angle with the inner surface of the battery housing.

According to another aspect of the present disclosure, there is provided a battery pack including the battery described above.

According to another aspect of the present disclosure, there is provided a vehicle including the battery or battery pack described above.

### Advantageous Effects

According to a battery of various embodiments of the present disclosure, and a battery pack and a vehicle including the same, when the internal pressure of the battery increases due to thermal runaway occurring in the battery, the sealing state of the sealing portion is strengthened, thereby reducing the risk of leakage of electrolyte from the battery.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a drawing illustrating the state where the top of a battery is open.
FIG. 2 is a drawing illustrating the state where the top of a battery is closed.
FIG. 3 is a perspective view illustrating a current collector of a battery.
FIG. 4 is a drawing illustrating problems of a conventional battery.
FIG. 5 is a drawing illustrating a sealing portion of a battery according to an embodiment of the present disclosure.
FIG. 6 is a perspective view of a gasket and a sealing portion of a battery, when viewed from below, according to an embodiment of the present disclosure.
FIG. 7 is a perspective view of a gasket and a sealing portion of a battery, when viewed from above, according to an embodiment of the present disclosure.
FIG. 8 is a perspective view of a gasket, a sealing portion, and a current collector of a battery, when viewed from below, according to an embodiment of the present disclosure.
FIG. 9 is a perspective view of a gasket, a sealing portion, and a current collector of a battery, when viewed from above, according to an embodiment of the present disclosure.
FIG. 10 is a cross-sectional view illustrating a sealing portion of a battery according to an embodiment of the present disclosure.
FIG. 11 is a cross-sectional view illustrating a sealing portion of a battery according to another embodiment of the present disclosure.
FIG. 12 is a drawing illustrating a battery pack including a battery according to embodiments of the present disclosure.
FIG. 13 is a drawing illustrating a battery according to embodiments of the present disclosure, a battery pack including the same, and a vehicle including the same.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure may include various embodiments. Redundant descriptions of substantially the same or similar configurations will be omitted from respective embodiments, and a description will be made based on differences therebetween.

The sizes of some elements shown in the attached drawings may be exaggerated, instead of reflecting their actual sizes, for convenience of explanation and clarification. In addition, the same reference numerals may indicate the same elements among the embodiments.

Throughout the specification, unless otherwise stated, respective elements may include a single or a plurality of elements.

In addition, the expression "an element is 'connected' or 'coupled' to another element" should be understood that the elements may be directly connected or coupled to each other, and that another element may be "interposed" between the elements, or that the elements may be "connected" or "coupled" through another element.

A single element herein should be construed to encompass a plurality of elements. In this specification, the expression "an element 'is configured as' or 'includes' other elements or steps" should be understood that the element may exclude some other elements or steps and that the element may further include additional elements or steps.

Throughout the specification, "A and/or B", unless otherwise stated, may denote "A" or "B", or "A and B".

Meanwhile, although terms indicating directions such as up, down, left, right, front, and back directions are used in this specification, it is obvious to those skilled in the art to which the present disclosure pertains that these terms are only for convenience of explanation with reference the relevant drawings and may vary depending on the position, arrangement, or rotation of the target object or the position of the observer.

In addition, the present disclosure may include various embodiments. Redundant descriptions of substantially the same or similar configurations will be omitted from respective embodiments, and a description will be made based on differences therebetween.

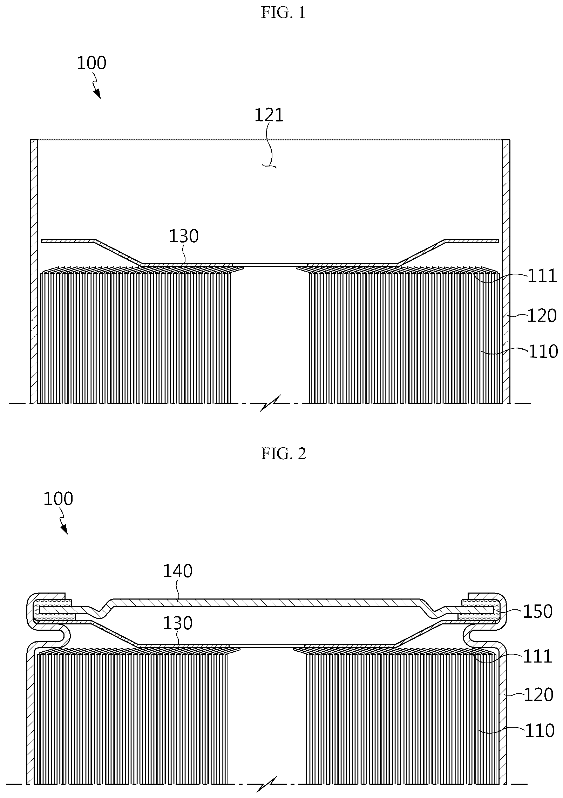

Hereinafter, a battery module according to the embodiments of the present disclosure, and a battery pack and a vehicle including the same will be described in detail with reference to FIGS. 1 to 13.

FIG. 1 is a drawing illustrating the state where the top of a battery to which the embodiments of the present disclosure may be applied is open.

A battery 100 may be a cylindrical battery. The battery 100 may include an electrode assembly 110, a battery housing 120, and a current collector 130.

The electrode assembly 110 may be produce by winding a laminate including two electrodes and a separator interposed therebetween. A central winding hole may be formed at the center of the electrode assembly 110. The two electrodes may be a positive electrode and a negative electrode, respectively.

An active material may be applied to one area of the two electrodes, and an area where the active material is not applied may be referred to as an uncoated area. An uncoated area 111 may be formed at the ends of the two electrodes in a direction in which the electrode assembly 110 is wound. FIG. 1 illustrates an uncoated area 111 of one of the two electrodes for convenience. The electrode in FIG. 1 may be one of either a negative electrode or a positive electrode, and is not limited thereto. The uncoated area 111 illustrated in FIG. 1 may be one of either an uncoated area of the negative electrode or an uncoated area of the positive electrode in the electrode assembly 110.

The uncoated area 111 may be formed at one end of the electrode constituting the electrode assembly 110. The uncoated area 111 may extend in the direction in which the electrode assembly 110 is wound.

The uncoated area 111 may be provided in one area of the electrode assembly 110. For example, the uncoated area 111 may be formed to extend from the electrode assembly 110 toward an opening 121.

The battery housing 120 may accommodate the electrode assembly 110 in an inner space. An opening 121 leading to the inner space may be formed on one side of the battery housing 120. The battery housing 120 may receive the electrode assembly 110 through the opening 121.

A closed portion (not shown) that closes the inner space may be formed opposite to the opening 121 on the other side of the battery housing 120, which is not shown in FIG. 1. The battery housing 120 may include an electrically conductive metal. Although one side of the battery housing 120 is open in FIG. 1, the opening 121 may be closed by another configuration.

The current collector 130 may be disposed on one side of the electrode assembly 110. The current collector 130 provided on one side of the electrode assembly 110 may be disposed near the opening 121.

The current collector 130 may have a current collector hole. The current collector hole may be formed at a position corresponding to the central winding hole of the electrode assembly 110.

FIG. 2 is a drawing illustrating the state where the top of a battery to which the embodiments of the present disclosure may be applied is closed.

Referring to FIG. 2, the current collector 130 may be configured to be electrically connected to the battery housing 120. For example, the current collector 130 may be electrically connected to the inner surface of the battery housing 120.

The current collector 130 may be configured to electrically connect the electrode of the electrode assembly 110 and the battery housing 120. For example, the current collector 130 may electrically connect the electrode assembly 110 and the battery housing 120 by having one area electrically connected to the uncoated area 111 and another area electrically connected to the battery housing 120.

Referring to FIG. 2, the battery 100 may further include a cap 140 fixed to one area of the battery housing 120 and configured to cover the opening 121. The cap 140 may be configured to be electrically insulated from the electrode assembly 110 and the battery housing 120 so as not to have polarity. For example, a non-conductive gasket 150 may be interposed between the cap 140 and the battery housing 120.

The gasket 150 may surround at least a portion of the edge of the cap 140 and may be fixed between the cap 140 and the battery housing 120. The gasket 150 may seal the gap between the cap 140 and the housing 120.

The gasket 150 may include, but is not limited to, rubber, silicone, nitrile, polyurethane, and/or fluorocarbon.

Referring to FIG. 2, a portion of the current collector 130 may be fixed between the bottom of the gasket 150 and the upper surface of the portion (beading portion) formed by pressing the outer surface of the housing 120 inward.

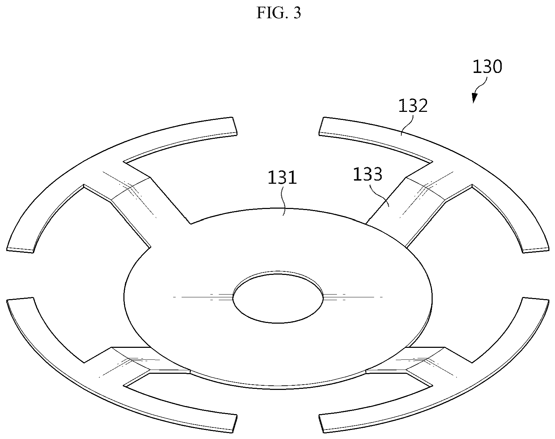

FIG. 3 is a perspective view illustrating a current collector of a battery to which the embodiments of the present disclosure may be applied.

A current collector 130 may be the current collector 130 illustrated in FIG. 1 and FIG. 2. The current collector 130 may include a support portion 131, a coupling portion 132, and a connection portion 133.

The current collector 130 may be a conductor having electrical conductivity overall.

The support portion 131 is an area of the current collector 130, which may be electrically connected to the uncoated area 111 in FIG. 1 and FIG. 2.

The coupling portion 132 is another area of the current collector 130, which may be fixed between the bottom of the gasket 150 and the upper surface of the portion (beading portion) formed by pressing the outer surface of the housing 120 inward in FIG. 1 and FIG. 2. Furthermore, the coupling portion 132 may be electrically connected to the inner surface of the housing 120.

The connection portion 133 may be a configuration that connects the support portion 131 and the coupling portion 132. The connection portion 133 may physically/electrically connect the support portion 131 and the coupling portion 132.

The shape of the current collector 130 illustrated in FIG. 3 is only an example to explain the embodiments of the present disclosure below, and the current collector 130 may be configured in any shape capable of electrically connecting the uncoated area 111 of the electrode assembly 110 and the battery housing 120 in FIG. 1 and FIG. 2.

According to another embodiment of the current collector 130, although not illustrated in FIG. 3, the current collector 130 may further include an uncoated-area connection portion (not shown). The uncoated-area connection portion may be configured to extend outward (or in the radial direction of the electrode assembly) from the support portion 131 and be electrically connected to the uncoated area 111. The uncoated-area connection portion may be provided between two connection portions 133.

According to the present embodiment, the support portion 131 may be indirectly electrically connected to the uncoated area, instead of being directly connected to the uncoated area, through the uncoated-area connection portion extending outward from the support portion 131.

In addition, according to the present embodiment, the uncoated-area connection portion and the coupling portion 132 may be indirectly electrically connected, instead of being directly connected, to each other through the support portion 131.

According to the present embodiment, when an external impact is applied to the battery 100, the possibility of damage to the coupling portion between the current collector 130 and the electrode assembly 110 and/or the coupling portion between the current collector 130 and the housing 120 may be minimized. Therefore, the electrical connection between the uncoated area 111 of the electrode assembly 110 and the current collector 130 may be more stably maintained.

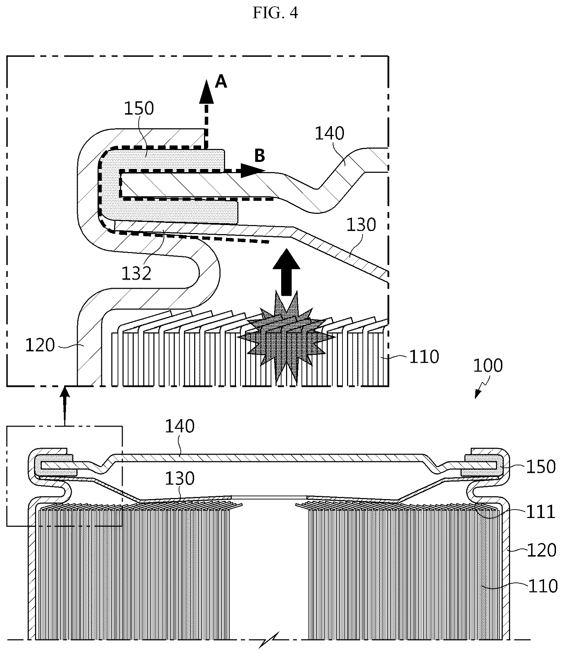

FIG. 4 is a drawing illustrating problems of a conventional battery. The battery 100 in FIG. 4 may include the same or similar configurations as those described with reference to FIGS. 1 to 3.

A chemical reaction occurs inside the battery 100 during charging and discharging, and if the heat generated during this process is not properly controlled, thermal runaway is likely to occur.

FIG. 4 illustrates the case where thermal runaway occurs inside the battery 100. If thermal runaway occurs inside the battery 100, high-temperature gas, flames, and/or sparks may be generated inside the battery 100. The gas generated inside the battery 100 due to thermal runaway may be compressed to high pressure inside the battery housing 120 and increase the internal pressure of the battery housing 120.

As described above, the gasket 150 may seal the gap between the cap 140 and the battery housing 120. The gasket 150 may also seal the gap between the battery housing 120 and the current collector 130. The gasket 150 may maintain the sealing state of the above elements, thereby preventing leakage of electrolyte or the like from the battery housing 120.

If the internal pressure of the battery housing 120 increases to a certain pressure or more due to thermal runaway, pressure may be applied to the battery housing 120, the current collector 130, the cap 140, the gasket 150, or the like, so that the shapes of the above elements may be deformed. In this case, gaps may be generated between the gasket 150 and the housing 120, between the gasket 150 and the cap 140, and/or between the gasket 150 and the current collector 130, thereby releasing the sealing state.

If the sealing state between the gasket 150 and the above elements is released due to thermal runaway of the battery 100, the electrolyte may leak from the inside of the battery 100 to the outside of the battery housing 120.

As indicated by arrows A and B in FIG. 4, the gaps between the gasket 150 and the above elements are likely to form a leakage path through which the electrolyte leaks from the battery housing 120 to the outside.

Hereinafter, various embodiments of the present disclosure that may solve the above problems will be described.

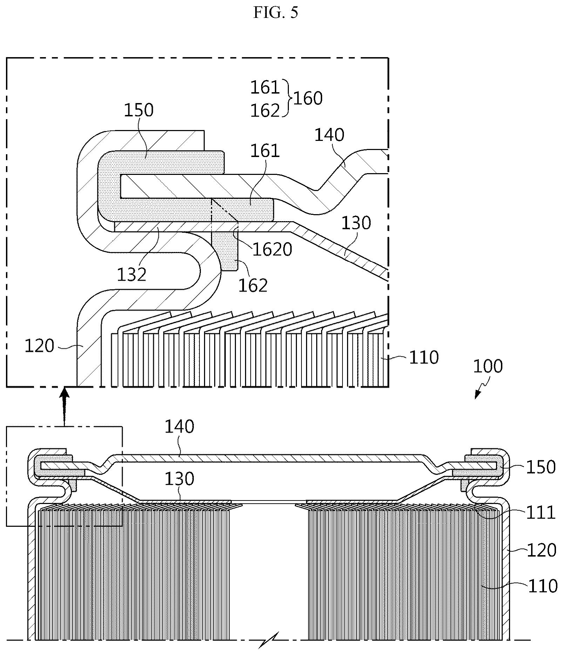

FIG. 5 is a drawing illustrating a sealing portion of a battery according to an embodiment of the present disclosure. The sealing portion 160 will be described below with reference to FIG. 5.

A sealing portion 160 according to an embodiment of the present disclosure may also be applied to the battery 100 described with reference to FIGS. 1 to 4. The battery 100 in FIG. 5 may include the same or similar configurations as the battery 100 illustrated in FIG. 2, in addition to the sealing portion 160.

The sealing portion 160 may be provided at one end of the gasket 150. Specifically, the sealing portion 160 may be provided at an end of the gasket 150 inside the battery housing 120. Hereinafter, "one end of the gasket 150" indicates "an end of the gasket 150 inside the battery housing 120".

The sealing portion 160 may include a first portion 161 and a second portion 162. The first portion 161 may be in close contact with the lower surface of the cap 140. The second portion 162 may be in close contact with the inner surface of the battery housing 120. The first portion 161 and the second portion 162 may be approximately orthogonal, but the angle between the first portion 161 and the second portion 162 is not limited to a specific value.

The sealing portion 160 may include, but is not limited to, rubber, silicone, nitrile, polyurethane, and/or fluorocarbon.

The sealing portion 160 may be provided at one end of the gasket 150, and a method of forming the same is not limited. For example, the sealing portion 160 may be formed integrally with the gasket 150 to extend from one end of the gasket 150. As another example, the sealing portion 160 may be produced separately from the gasket 150 and then connected to one end of the gasket 150. The sealing portion 160 may be connected to the gasket 150 by having a part inserted into the gasket 150, or the gasket 150 may be connected to the sealing portion 160 by having a part inserted into the sealing portion 160.

Referring to FIG. 5, the first portion 161 may seal the gap between one end of the gasket 150 and the lower surface of the cap. In addition, the second portion 162 may seal the gap between one end of the gasket 150 and the inner surface of the battery housing 120.

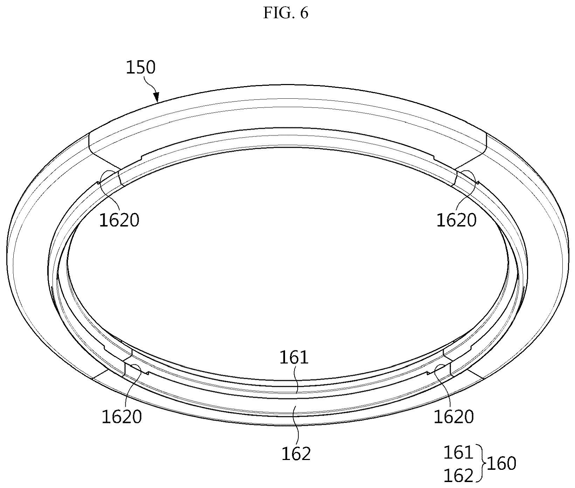

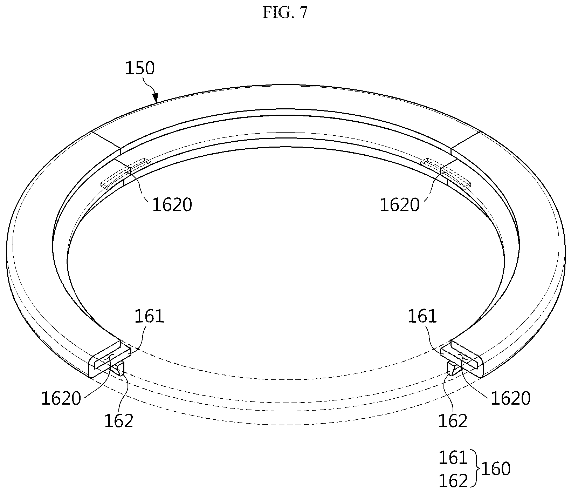

A penetration portion 1620 through which the current collector 130 penetrates may be formed in a part of the sealing portion 160. Hereinafter, the specific shapes of the gasket 150 and the sealing portion 160 will be described in more detail with reference to FIGS. 6 and 7.

FIG. 6 is a perspective view of a gasket and a sealing portion of a battery, when viewed from below, according to an embodiment of the present disclosure. FIG. 7 is a perspective view of a gasket and a sealing portion of a battery, when viewed from above, according to an embodiment of the present disclosure. The gasket and the sealing portion will be described below with reference to FIGS. 6 and 7.

The gasket 150 may include configurations identical or similar to those of the gasket 150 described above with reference to other drawings. The gasket 150 may be formed to surround an edge of the cap 140.

The sealing portion 160 may be provided at one end of the gasket 150. Referring to FIGS. 6 and 7, one end of the gasket 150 may be directed toward the inside of the gasket 150. The sealing portion 160 may also include configurations identical or similar to those of the sealing portion 160 described above with reference to other drawings.

A penetration portion 1620 may be formed in a portion of the sealing portion 160 through which the current collector 130 penetrates. The penetration portion 1620 may be configured such that a portion of the current collector 130 may penetrate through it. For example, the penetration portion 1620 may be configured such that the connection portion 133 of the current collector 130, described above with reference to FIG. 3, may penetrate through it. The current collector 130 may be electrically connected to the battery housing 120 through the penetration portion 1620 (see FIG. 5).

As another example, the sealing portion 160 may be configured to surround at least a portion of the current collector 130. For example, the penetration portion 1620 of the sealing portion 160 may be configured to surround the connection portion 133 of the current collector 130.

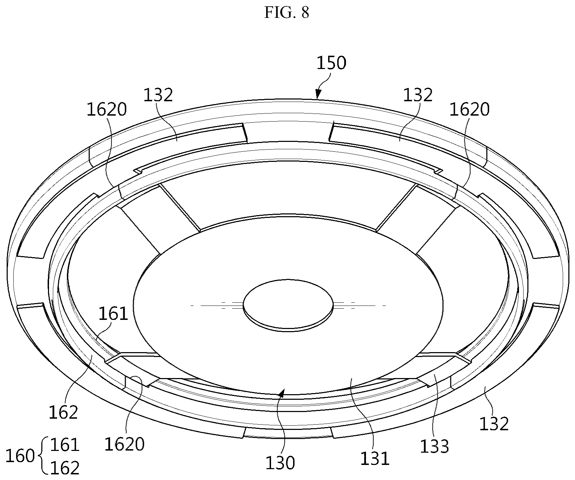

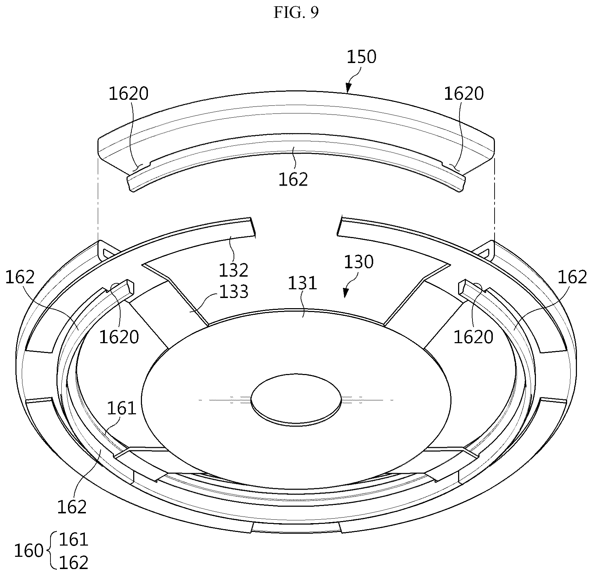

FIG. 8 is a perspective view of a gasket, a sealing portion, and a current collector of a battery, when viewed from below, according to an embodiment of the present disclosure. FIG. 9 is a perspective view of a gasket, a sealing portion, and a current collector of a battery, when viewed from above, according to an embodiment of the present disclosure.

The sealing portion 160 may be configured as a plurality of parts. Referring to FIG. 8 and FIG. 9, the sealing portion 160 may be configured as a number of parts corresponding to the number of connection portions 133 of the current collector 130.

For example, referring to FIG. 9, the sealing portion 160 may be configured to be separated around the penetration portion 1620 through which the connection portion 133 penetrates. The sealing portion 160 may be provided as a plurality of parts and assembled to surround the current collector 130.

However, the shape of the current collector 130, the number of connection portions 133, and the number of separated parts of the sealing portions 160 illustrated in FIGS. 8 and 9 are only examples, and may vary as needed.

The sealing portion 160 may be configured to surround at least a portion of the current collector 130 and seal the corresponding portion. For example, referring to FIGS. 8 and 9, the second portion 162 of the sealing portion 160 may surround the connection portion 133 of the current collector 130 through the penetration portion 1620, thereby sealing the gap between the connection portion 133 and the sealing portion 160.

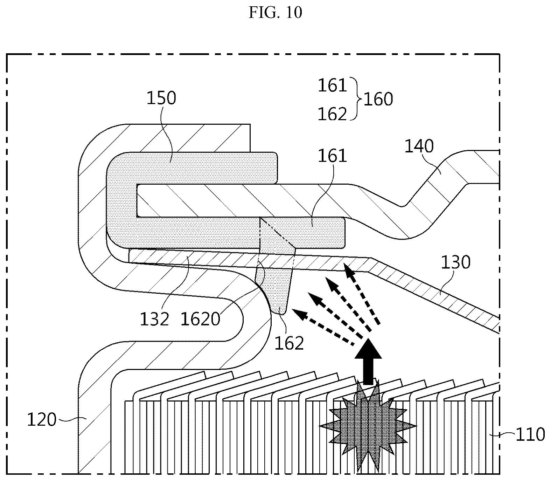

FIG. 10 is a cross-sectional view illustrating a sealing portion of a battery according to an embodiment of the present disclosure. Hereinafter, the structure, function, and effect of the sealing portion 160 will be described in detail with reference to FIG. 10.

As described above, when thermal runaway occurs inside the battery 100, the internal pressure inside the battery housing 120 may significantly increase due to gas generated inside the battery housing 120. The internal pressure of the battery housing 120 due to the gas may apply pressure to the entire area of the sealing portion 160.

The first portion 161 of the sealing portion 160 may be provided at one end of the gasket 150 so as to be in close contact with the lower surface of the cap 140. Specifically, the first portion 161 may extend from one end of the gasket 150 in a direction parallel to the lower surface of the cap 140 to come into close contact with the cap 140. According to the above-implemented configuration, the first portion 161 of the sealing portion 160 may come into closer contact with the lower surface of the cap 140 as the pressure inside the battery housing 120 increases, so that the airtight state by the sealing portion 160 may be further strengthened.

The second portion 162 of the sealing portion 160 may be provided at one end of the gasket 150 so as to be in close contact with the inner surface of the battery housing 120. Specifically, the second portion 162 may extend from one end of the gasket 150 in a direction parallel to the inner surface of the battery housing 120 to come into close contact with the inner surface of the battery housing 120. According to the above-implemented configuration, the second portion 161 of the sealing portion 160 may come into closer contact with the inner surface of the battery housing 120 as the pressure inside the battery housing 120 increases, so that the airtight state by the sealing portion 160 may be further strengthened.

If the pressure inside the battery housing 120 increases, the angle between the first portion 161 and the second portion 162 may further increase, so that the first portion 161 and the second portion 162 may be separated from each other, and the first portion 161 may come into closer contact with the lower surface of the cap 140, and the second portion 162 may come into closer contact with the inner surface of the battery housing 120.

According to the above-implemented configuration, as the internal pressure of the battery housing 120 increases due to thermal runaway occurring in the battery 100, the sealing state by the sealing portion 160 may be further strengthened, thereby drastically reducing the risk of electrolyte leakage from the battery housing 120.

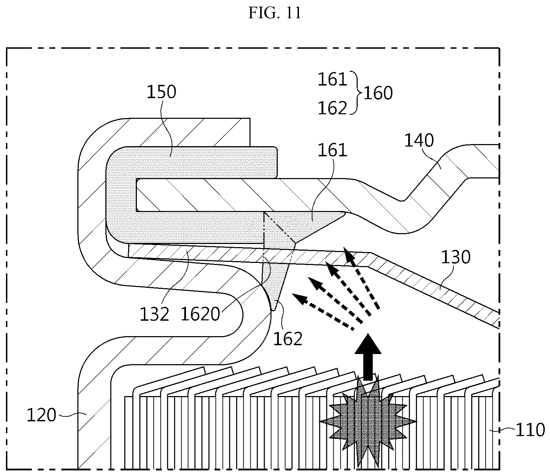

FIG. 11 is a cross-sectional view illustrating a sealing portion of a battery according to another embodiment of the present disclosure. Hereinafter, the structure, function, and effect of the sealing portion 160 will be described in detail with reference to FIG. 11.

The sealing portion 160 according to the embodiment in FIG. 11 may have the remaining configurations, excluding the configurations to be described below, the same as or similar to those in the embodiment described with reference to FIG. 10.

The sealing portion 160 may include a first portion 161 and a second portion 162.

Referring to FIG. 11, the first portion 161 may be configured to form a predetermined angle of inclination with the lower surface of the cap 140. According to the present embodiment, the first portion 161 may be pressed toward the lower surface of the cap 140, regardless of the direction in which the internal pressure of the battery housing 120 is applied, so that the airtightness of the cap 140 may be further strengthened.

Referring to FIG. 11, the second portion 162 may be configured to form a predetermined angle of inclination with the inner surface of the battery housing 120. According to the present embodiment, the second portion 162 may be pressed toward the inner surface of the battery housing 120, regardless of the direction in which the internal pressure of the battery housing 120 is applied, so that the airtightness of the cap 140 may be further strengthened.

In the present embodiment, as the pressure inside the battery housing 120 increases, the angle between the first portion 161 and the second portion 162 may increase further, so that the first portion 161 and the second portion 162 may be separated from each other, and accordingly, the first portion 161 may come into closer contact with the lower surface of the cap 140, and the second portion 162 may come into closer contact with the inner surface of the battery housing 120.

According to the above-implemented configuration, as internal pressure of the battery housing 120 increases due to thermal runaway occurring in the battery 100, the sealing state by the sealing portion 160 may be further strengthened, thereby drastically reducing the risk of electrolyte leaking from the battery housing 120.

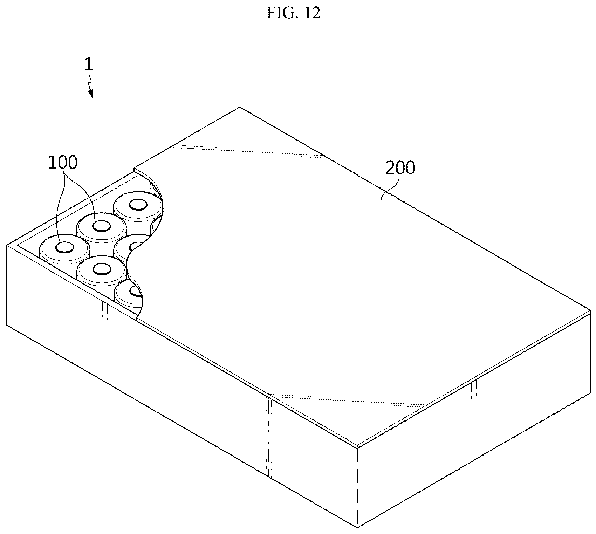

FIG. 12 is a drawing illustrating a battery pack according to an embodiment of the present disclosure.

Referring to FIG. 12, a battery pack 1 according to an embodiment of the present disclosure may include one or more batteries 100 described above with reference to other drawings. In addition, the battery pack 1 may further include other configurations in addition to the battery 100 according to the present disclosure. For example, the battery pack 1 according to the present disclosure may further include configurations such as a BMS (Battery Management System), a bus-bar, a relay, and a current sensor.

The battery pack 1 may further include a pack case 200. The pack case 200 may provide a space in which one or more batteries 100 are to be stored. In the case where the battery pack 1 includes a plurality of batteries 100, the pack case 200 may include a space divided to store the plurality of batteries 100.

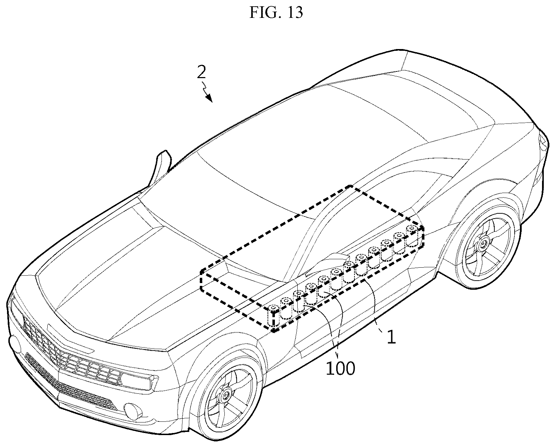

FIG. 13 is a drawing illustrating a battery, a battery pack including the same, and a vehicle including the same.

Referring to FIG. 13, a vehicle 2 may include one or more battery packs 1. For example, the vehicle 2 may be, but is not limited to, one of an electric vehicle, a hybrid vehicle, or a plug-in hybrid vehicle. The vehicle 2 may be one of a four-wheeled vehicle or a two-wheeled vehicle. The vehicle 2 may operate using the power supplied from a battery pack 1 or a battery module according to embodiments of the present disclosure.

The embodiments or other embodiments of the present disclosure described above are not mutually exclusive or distinct. The embodiments or other embodiments of the present disclosure described above may be combined or used in combination with each other in their respective configurations or functions. For example, configuration A described in a specific embodiment and/or drawing and configuration B described in another embodiment and/or drawing may be combined. That is, even if the combination between the configurations is not directly described, the combination is possible, unless otherwise stated.

The above detailed description should not be construed to provide examples of the present disclosure, instead of limiting the present disclosure. The scope of the present disclosure should be determined by a reasonable interpretation of the appended claims, and all changes within the equivalent scope of the present disclosure are included within the scope of the present disclosure.

## Claims

1. A battery comprising:
an electrode assembly comprising an electrode having an uncoated area;
a battery housing having an opening formed at one side and an inner space capable of accommodating the electrode assembly;
a cap fixed to an area of the battery housing so as to cover the opening;
a gasket surrounding at least a portion of an edge of the cap and fixed between the cap and the battery housing; and
a sealing portion provided at one end of the gasket and comprising a first portion in close contact with a lower surface of the cap and a second portion in close contact with an inner surface of the battery housing.

2. The battery according to claim 1,
wherein the sealing portion is formed integrally with the gasket so as to extend from the one end of the gasket.

3. The battery according to claim 1,
wherein the sealing portion is configured as a separate configuration from the gasket and is connected to the one end of the gasket.

4. The battery according to claim 1,
wherein the first portion is configured to come into closer contact with the lower surface of the cap if pressure inside the battery housing increases.

5. The battery according to claim 1,
wherein the first portion seals a gap between the one end of the gasket and the lower surface of the cap.

6. The battery according to claim 1,
wherein the second portion is configured to come into closer contact with the inner surface of the battery housing if pressure inside the battery housing increases.

7. The battery according to claim 1,
wherein the second portion seals a gap between the one end of the gasket and the inner surface of the battery housing.

8. The battery according to claim 1,
wherein, if pressure inside the battery housing increases, an angle between the first portion and the second portion increases, so that the first portion comes into closer contact with the lower surface of the cap and so that the second portion comes into closer contact with the inner surface of the battery housing.

9. The battery according to claim 1,
further comprising a current collector configured to electrically connect the electrode assembly and the battery housing,
wherein the sealing portion is configured to surround at least a portion of the current collector.

10. The battery according to claim 9,
wherein the second portion is configured to surround and seal at least a portion of the current collector.

11. The battery according to claim 9,
wherein the current collector is electrically connected to the battery housing by penetrating at least a portion of the sealing portion.

12. The battery according to claim 1,
wherein the first portion is configured to form a predetermined angle with the lower surface of the cap.

13. The battery according to claim 1,
wherein the second portion is configured to form a predetermined angle with the inner surface of the battery housing.

14. A battery pack comprising a battery according to any one of claims 1 to 13.

15. A vehicle comprising a battery pack of claim 14.
